# EUROPEAN PATENT SPECIFICATION

(11) **EP 3 961 500 B1**
(45) Date of publication and mention of the grant of the patent: **07.08.2024**
(21) Application number: 20794139.4
(22) Date of filing: 27.03.2020
(51) Int. Cl.: G06F 18/25, G06V 10/80, G06V 10/25, G06V 10/82, G06N 3/084, G06T 7/00, G06N 3/045

(54) **MEDICAL IMAGE DETECTION METHOD BASED ON DEEP LEARNING, AND RELATED DEVICE**
MEDIZINISCHES BILDDETEKTIONSVERFAHREN BASIEREND AUF TIEFENLERNEN UND ZUGEHÖRIGE VORRICHTUNG
PROCÉDÉ DE DÉTECTION D'IMAGES MÉDICALES BASÉE SUR UN APPRENTISSAGE PROFOND, ET DISPOSITIF ASSOCIÉ

(30) Priority: 22.04.2019 CN 201910324565
(43) Date of publication of application: 02.03.2022
(73) Proprietor: Tencent Technology (Shenzhen) Company Limited, Shenzhen, Guangdong, 518057 (CN)
(72) Inventor: GONG, Lijun, Shenzhen, Guangdong 518057, (CN)
(74) Representative: Eisenführ Speiser
(86) International application number: PCT/CN2020/081655
(87) International publication number: WO 2020/215984

(56) References cited:
- WO-A1-2018/222755
- CN-A- 108 197 606
- CN-A- 109 190 752
- CN-A- 109 544 534
- CN-A- 110 111 313
- WANG CHI ET AL: "Automatic Liver Segmentation Using Multi-plane Integrated Fully Convolutional Neural Networks", 2018 IEEE INTERNATIONAL CONFERENCE ON BIOINFORMATICS AND BIOMEDICINE (BIBM), IEEE, 3 December 2018 (2018-12-03), pages 1 - 6, XP033507475, DOI: 10.1109/BIBM.2018.8621257
- JAVAID UMAIR ET AL: "Multi-organ Segmentation of Chest CT Images in Radiation Oncology: Comparison of Standard and Dilated UNet", 25 September 2018, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 188 - 199, ISBN: 978-3-540-74549-5, XP047487008
- QINGBIN SHAO ET AL: "Attentive CT Lesion Detection Using Deep Pyramid Inference with Multi-Scale Booster", ARXIV.ORG, CORNELL UNIVERSITY LIBRARY, 201 OLIN LIBRARY CORNELL UNIVERSITY ITHACA, NY 14853, 9 July 2019 (2019-07-09), XP081439619

## Description

This application claims priority to Chinese Patent Application No. 2019103245658 filed with the China National Intellectual Property Administration on April 22, 2019 and entitled "MEDICAL IMAGE DETECTION METHOD BASED ON DEEP LEARNING, AND RELATED DEVICE".

### FIELD

The present disclosure relates to the technical field of Artificial Intelligence (AI), and in particular, to a medical image detection technique.

### BACKGROUND

At present, a medical image detection model is mainly adopted to perform image detection on data of a two-dimension (2D) image, to recognize a region of interest in the 2D image. This method is generally suitable for only breast image data and the like. In a case that a Computed Tomography (CT) image is processed using the method, the medical image detection model has low reliability since information of three-dimensional volume data of the CT image is lost.

Hence, in the field of medical image detection, how to comprehensively use the three-dimensional volume data of the medical image to improve the reliability of region-of-interest prediction is a technical problem that needs to be resolved urgently.
WO2018222755 A1 discloses a trained fully convolutional neural network (CNN) to classify if an input image contains a lesion. The CNN model includes a contracting path and an expanding path. The contracting path includes a number of convolutional layers and a number of pooling layers, each pooling layer preceded by at least one convolutional layer, and the expanding path includes a number of convolutional layers and a number of upsampling layers, each upsampling layer preceded by at least one convolutional layer and includes a transpose convolution operation which performs at least one of an upsampling operation and an interpolation operation with a learned kernel, or an upsampling operation followed by an interpolation operation to segment a lesion candidate. Skip connections may be included between at least some of the layers in the contracting path and the expanding path where image sizes of those layers are compatible, and the skip connections may include concatenating features maps, or the skip connections may be residual connections and therefore may include adding or subtracting the values of the feature maps.
Wang Chi et al.: "Automatic Liver Segmentation Using Multi-plane Integrated Fully Convolutional Neu" discloses a multi-plane network (MPNet) for the liver segmentation task. Fast bridges are built directly from the encoder layers to the decoder layers. The information transferred from the encoder forward is concatenated with the decoder feature layers. The combined feature is then used as the input for the next layer, which can integrate low-level and advanced features. To integrate features at different scales, three 3*3*1 convolution layers are used at the corresponding depths of the network to get multiple intermediate predictions and the multiple intermediate predictions are upsampled to the original resolution. The final score map is achieve by concatenate these predictions into a 3*3*1 convolution layer.
Javaid Umair et al.: "Multi-organ Segmentation of Chest CT Images in Radiation Concology" discloses Unet, which is a multi-scale convolutional network. The Unet consists of a contracting and an expanding path. The contracting step extracts features from data where each step of the contracting path consists of two convolutions with a 3 × 3 kernel, each followed by a ReLU activation along with 2x2 max-pooling with strides of two in each direction of the domain; the expanding path upsamples the feature maps and halves the number of feature channels. Each step in the expanding path uses unpooling, which is concatenated with the features in the contracting path by copy connections during the same step.

### SUMMARY

A deep learning-based medical image detection method and apparatus, a computer-readable medium, and an electronic device are provided according to the embodiments of the present disclosure, so as to improve the reliability of prediction of a region of interest in a medical image.

Other features and advantages of the present disclosure become obvious through the following detailed descriptions, or may be partially learned through the practice of the present disclosure.

According to an aspect of the embodiments of the present disclosure, provided is a deep learning-based medical image detection method, the method including:
acquiring a to-be-detected medical image, the to-be-detected medical image including multiple slices;
extracting, for each of the multiple slices in the to-be-detected medical image, N basic feature maps of the slice by using a deep neural network, N being an integer greater than 1;
fusing, for each of the multiple slices in the to-be-detected medical image, features of the N basic feature maps of the slice by using the deep neural network, to obtain M enhanced feature maps of the slice, M being an integer greater than 1;
performing, for each of the multiple slices in the to-be-detected medical image, a hierarchically dilated convolutions operation on each of the M enhanced feature maps of the slice by using the deep neural network, to generate a superposed feature map of each of the M enhanced feature maps of the slice; and
predicting position information of a region of interest in the to-be-detected medical image and a confidence of the position information of the region of interest by using the deep neural network based on the superposed feature map of each of the multiple slices in the to-be-detected medical image, wherein the N basic feature maps comprise A low-level feature maps and B high-level feature maps, each of A and B being an integer greater than 1; and
the fusing the features of the N basic feature maps of the slice by using the deep neural network, to obtain the M enhanced feature maps of the slice comprises:
   performing convolution processing on an A^{th} low-level feature map of the slice, to obtain a first high-level feature map of the slice as a first enhanced feature map; and
   for each i being an integer greater than or equal to 1 and smaller than A, performing convolution processing on an (A-i)^{th} low level feature map of the slice, and upsampling an i^{th} high-level feature map of the slice, and adding a feature map obtained by performing convolution processing on the (A-i)^{th} low level feature map and a feature map obtained by upsampling the i^{th} high-level feature map, to obtain an (i+1)^{th} high level feature map as a second enhanced feature map.

According to an aspect of the embodiments of the present disclosure, provided is a deep learning-based medical image detection apparatus, including:
an image acquisition module, configured to acquire a to-be-detected medical image, the to-be-detected medical image including multiple slices;
a feature extraction module, configured to extract, for each of the multiple slices in the to-be-detected medical image, N basic feature maps of the slice by using a deep neural network, N being an integer greater than 1;
a feature fusing module, configured to fuse, for each of the multiple slices in the to-be-detected medical image, features of the N basic feature maps of the slice by using the deep neural network, to obtain M enhanced feature maps of the slice, M being an integer greater than 1;
a dilated convolution module, configured to perform, for each of the multiple slices in the to-be-detected medical image, a hierarchically dilated convolutions operation on each of the M enhanced feature maps of the slice by using the deep neural network, to generate a superposed feature map of each of the M enhanced feature maps of the slice; and
a region-of-interest prediction module, configured to predict position information of a region of interest in the to-be-detected medical image and a confidence of the position information of the region of interest by using the deep neural network based on the superposed feature map of each of the multiple slices in the to-be-detected medical image.

According to an aspect of the embodiments of the present disclosure, provided is a computer-readable medium, having a computer program stored thereon, the computer program, when executed by a processor, implementing the deep learning-based medical image detection method according to the embodiments above.

According to an aspect of the embodiments of the present disclosure, provided is an electronic device, including one or more processors; and a storage apparatus, configured to store one or more programs, the one or more programs, when executed by the one or more processors, causing the one or more processors to implement the deep learning-based medical image detection method according to the embodiments above.

According to an aspect of the embodiments of the present disclosure, provided is a computer program product, including instructions, the instructions, when run on a computer, causing the computer to execute the deep learning-based medical image detection method according to the embodiments above.

In the technical solutions according to some embodiments of the present disclosure, in one aspect, by acquiring the to-be-detected medical image including multiple successive slices and processing each of the multiple slices in the to-be-detected medical image by using a deep neural network, the position information of the region of interest in the to-be-detected medical image and the confidence of the position information of the region of interest are automatically predicted by using three-dimensional information in the to-be-detected medical image, improving the reliability of a prediction result; in another aspect, basic feature maps of different levels of each of the multiple slices in the to-be-detected medical image are fused to obtain enhanced feature maps, that is, low-level features and high-level features in the to-be-detected medical image are fused, such that objects of different scales in the to-be-detected medical image can be better detected by fusing the low-level features and the high-level features, since the low-level features are helpful for detecting small-scale objects in the to-be-detected medical image. In addition, a hierarchically dilated convolutions operation is performed on the fused enhanced feature maps, so as to capture surrounding information of the region of interest in the to-be-detected medical image, to assist in determining whether the region of interest (for example, a region of a suspected lesion) is a true region of interest based on the surrounding information, facilitating more accurate object detection.

In the technical solutions according to other embodiments of the present disclosure, the deep neural network may be an improved Feature Pyramid Network (FPN). In one aspect, the capability of the network for capturing multi-scale information is strengthened, so as to enhance the capability of the network for detecting the regions of interest of different scales. In another aspect, as compared with the related technologies, under the same detection accuracy of the region of interest, with the technical solutions according to the embodiments of the present disclosure, only a slice with annotation information, a slice immediately preceding the slice with annotation information, and a slice immediately succeeding the slice with annotation are required for training the deep neural network, that is, a model with a high detection accuracy can be obtained by training by using only the three slices in each medical image, where the three-dimensional information in the medical image is utilized, without causing excess redundant information, thereby reducing a data processing amount of the training process and the prediction phase, improving the computing processing rate and efficiency, and facilitating faster detection of the position of the region of interest in the medical image and the confidence of the position of the region of interest. Moreover, the deep learning-based medical image detection method is applicable to multi-scale CT image detection for assisting a doctor in detecting a suspected lesion region in the CT image, thereby reducing workload of a doctor and improving the working efficiency of the doctor.

### BRIEF DESCRIPTION OF THE DRAWINGS

Accompanying drawings herein are incorporated into the specification and constitute a part of this specification, show embodiments that conform to the present disclosure, and are used for describing a principle of the present disclosure together with this specification. Apparently, the accompanying drawings described below are merely some embodiments of the present disclosure, and a person of ordinary skill in the art may further obtain other accompanying drawings according to the accompanying drawings without creative efforts. In the accompanying drawings:
FIG. 1 shows a flowchart of a deep learning-based medical image detection method according to an embodiment of the present disclosure;
FIG. 2 shows a schematic structural diagram of a block in a Resnet50 network according to an embodiment of the present disclosure;
FIG. 3 shows a schematic structural diagram of an improved FPN network according to an embodiment of the present disclosure;
FIG. 4 shows a schematic structural diagram of a feature fusing network and a hierarchically dilated convolutions network according to an embodiment of the present disclosure;
FIG. 5 shows a schematic structural diagram of a hierarchically dilated convolutions network according to an embodiment of the present disclosure;
FIG. 6 shows a schematic diagram of a deep learning-based medical image detection method according to an embodiment of the present disclosure;
FIG. 7 shows a diagram of a detection result of a deep learning-based medical image detection method according to an embodiment of the present disclosure;
FIG. 8 shows a block diagram of a deep learning-based medical image detection apparatus according to an embodiment of the present disclosure; and
FIG. 9 shows a schematic structural diagram of a computer system adapted to implement an electronic device according to an embodiment of the present disclosure.

### DESCRIPTION OF EMBODIMENTS

The exemplary embodiments are described comprehensively with reference to the accompanying drawings. However, the exemplary embodiments may be implemented in multiple forms, and are not to be understood as being limited to the examples described herein. Conversely, the implementations are provided to make the present disclosure more comprehensive and complete, and comprehensively convey the idea of the examples of the implementations to a person skilled in the art.

In addition, the described features, structures or characteristics may be combined in one or more embodiments in any appropriate manner. In the following descriptions, a lot of specific details are provided to give a comprehensive understanding of the embodiments of the present disclosure. However, a person of ordinary skill in the art is to be aware that, the technical solutions in the present disclosure may be implemented without one or more of the particular details, or another method, unit, apparatus, or step may be used. In other cases, well-known methods, apparatuses, implementations, or operations are not shown or described in detail, in order not to obscure the aspects of the present disclosure.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not need to include all content and operations/steps, and do not need to be performed in the described orders either. For example, some operations/steps may be further divided, while some operations/steps may be combined or partially combined. Therefore, an actual execution order may change according to an actual case.

Artificial intelligence involves theories, methods, technologies, and application systems that use a digital computer or a machine controlled by a digital computer to simulate, extend, and expand human intelligence, perceive an environment, obtain knowledge, and use knowledge to obtain an optimal result. In other words, artificial intelligence is a comprehensive technology in computer science and attempts to understand the essence of intelligence and produce a new intelligent machine that reacts in a manner similar to human intelligence. Artificial intelligence is to study the design principles and implementation methods of various intelligent machines, to enable the machines to have the functions of perception, reasoning, and decision-making.

The artificial intelligence technology is a comprehensive discipline, and relates to a wide range of fields including both hardware-level technologies and software-level technologies. The basic artificial intelligence technologies generally include technologies such as sensors, dedicated artificial intelligence chips, cloud computing, distributed storage, big data processing technologies, operating/interaction systems, and electromechanical integration. Major directions of the artificial intelligence software technology include a computer vision (CV) technology, a speech processing technology, a natural language processing technology, and machine learning/deep learning, and the like.

The computer vision (CV) is a science that studies how to cause a machine to "see", that is, to use a camera and a computer to replace human eyes to perform machine vision such as recognition, tracking, and measurement on a target, and further perform graphic processing, so that the computer processes the target into an image more suitable for human eyes to observe, or an image transmitted to an instrument for detection. As a scientific discipline, computer vision studies related theories and technologies and attempts to establish an artificial intelligence system capable of obtaining information from images or multidimensional data. The computer vision technology generally includes image segmentation, image processing, image recognition, image semantic understanding, image retrieval, OCR, video processing, video semantic understanding, video content/behavior recognition, three-dimensional object reconstruction, 3D technologies, virtual reality, augmented reality, synchronous positioning, map construction, and the like, and further includes common biometric recognition technologies such as face recognition and fingerprint recognition.

Machining learning (ML) is a multi-field interdiscipline, and relates to multiple disciplines including the probability theory, statistics, the approximation theory, convex analysis, and the algorithm complexity theory. Machining learning specializes in studying how a computer simulates or implements a human learning behavior to obtain new knowledge or skills, and reorganize an existing knowledge structure, so as to keep improving its performance. Machining learning is the base for artificial intelligence, is a basic way to make the computer intelligent, and is applied to various fields of artificial intelligence. Machining learning and deep learning generally include technologies including artificial neural networks, belief networks, reinforcement learning, transfer learning, inductive learning, and learning from demonstrations.

The medical image detection method according to the embodiments of the present disclosure relates to computer vision technologies, machining learning technologies, and the like of artificial intelligence, and are explained using the following embodiments.

Abbreviations and key terms involved in the embodiments of the present disclosure are defined in the following.

Convolutional neural network (CNN) refers to a neural network in a deep learning classification detection technology, including a convolution layer, a pooling layer, and a fully connected layer.

Region-based Convolutional Neural Networks (RCNN) refer to generating candidate regions on an image, extracting a feature of each candidate region by using a deep network, transmitting the feature into a classifier of each category, determining whether the feature belongs to this category, and using a regression machine to finely correct a candidate box position.

Dilated convolution refers to adding a dilated space in a standard convolution operation, a gap existing between convolution kernels so as to enlarge a receptive field of the convolution operation without increasing the number of convolution parameters.

CT image: CT refers to computed tomography, and an image obtained by scanning a certain part of a human body using X-ray, Y-ray, ultrasonic wave, and the like is referred to as a CT image.

Slice refers to a slice in a CT image, and the CT image is composed of multiple successive slices.

Region-of-interest detection refers to detecting a region of interest in a medical image, such as an object organ region and a suspected lesion region, and providing a confidence score.

Feature map is obtained by convolution of an image and a filter. The feature map may be convoluted with the filter to generate a new feature map.

Anchor refers to rectangular boxes with different sizes and aspect ratios defined on the feature map in advance.

Proposal refers to an anchor obtained by performing categorical regression non-maximum suppression (NMS).

A bounding box is abbreviated as BBox.

Ground true bounding boxes (gt_BBoxes) refer to a true region of interest annotated by a doctor, i.e., a true bounding box.

Intersection over Union (IoU) refers to a ratio of an intersection to a union of two bounding boxes.

Region of Interest Pooling (ROI pooling) refers to, during detection, extracting proposals obtained by the network and adjusting the proposals to a uniform size.

FPN is an article detection method that includes combining a feature of a shallow network and a feature of a deep network to obtain a new feature map and performing prediction based on the new feature map.

Region Propose Network (RPN): when processing an extracted convolution feature map, the RPN is used for searching for a predefined number of regions that possibly include objects.

Confidence is a reliability level of a predicted parameter, and a higher confidence correspondence to a more reliable predicted parameter.

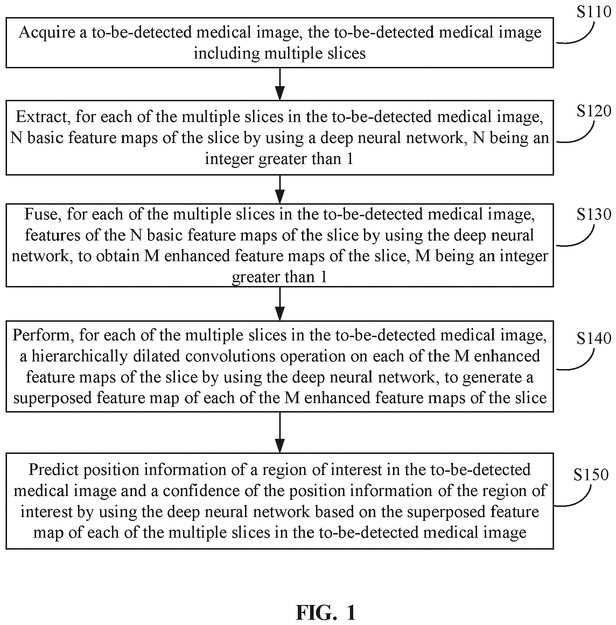

FIG. 1 shows a flowchart of a deep learning-based medical image detection method according to an embodiment of the present disclosure. The deep learning-based medical image detection method according to the embodiment of the present disclosure may be executed by any electronic device having a computing processing capability, such as a terminal device, a server, a server cluster, and a cloud server, which is not limited in the present disclosure. In the exemplary explanations, the method according to the embodiment of the present disclosure being executed by a cloud server is described as an example.

As shown in FIG. 1, the deep learning-based medical image detection method according to an embodiment of the present disclosure includes the following steps S110 to S150.

In Step S110, a to-be-detected medical image is acquired, the to-be-detected medical image including multiple slices.

In an embodiment of the present disclosure, the to-be-detected medical image may be a CT image including a region of interest (such as an object organ and an object part), and the CT image may include multiple successive slices. In the following image processing process, multiple slices of the CT image may be selected, for example, any three successive slices (in the following exemplary explanation, the three successive slices are respectively referred to as a first slice, a second slice, and a third slice), but the present disclosure is not limited thereto, and the appropriate number of slices may be selected according to required accuracy and an available computing capacity. The technical solution according to the embodiments of the present disclosure is applicable to any three-dimensional medical image. In the following embodiments, the CT image is taken as an example for description.

In the technical solution according to the embodiment of the present disclosure, the deep neural network model generally processes by using a single slice as a processing unit. Therefore, in steps S120 to S150 in this embodiment, a single slice is used as the processing unit, to describe the processing process of the deep neural network model.

In actual applications, the deep neural network model may process the multiple slices included in the to-be-detected medical image one by one. Alternatively, the deep neural network model may simultaneously process the multiple slices included in the to-be-detected medical image. Further, the processing capability of the deep neural network model is not limited herein.

In Step S120, for each of the multiple slices in the to-be-detected medical image, N basic feature maps of the slice are extracted by using a deep neural network. N is an integer greater than or equal to 1.

In an embodiment of the present disclosure, the deep neural network may include a feature extraction network. The feature extraction network may extract low-level feature maps and high-level feature maps including different information for the slice as the basic feature maps.

N may be equal to 5, but the present disclosure is not limited thereto. The value of N may be determined according to the structure of the feature extraction network.

In Step S130, for each of the multiple slices in the to-be-detected medical image, features of the N basic feature maps of the slice by using the deep neural network, to obtain M enhanced feature maps of the slice. M is an integer greater than or equal to 1.

For example, M may be equal to 3, but the present disclosure is not limited thereto. The value of M may be determined according to the value of N and specific requirements.

In an exemplary embodiment, N basic feature maps of the slice may include A low-level feature maps and B high-level feature maps, where each of A and B in an integer greater than 1. In this case, the fusing the features of the N basic feature maps of the slice to obtain the M enhanced feature maps of the slice may include:

performing convolution processing on an i^{th} low-level feature map of the slice; upsampling a j^{th} high-level feature map of the slice; and adding a feature map obtained by performing the convolution processing on the i^{th} low-level feature map and a feature map obtained by the upsampling of the j^{th} high-level feature map, to obtain a k^{th} enhanced feature map of the slice, where
1≤i<A, 1≤j≤B, 1<k≤M, and each of i, j, and k is an integer.

In an exemplary embodiment, the N basic feature maps of the slice may include A low-level feature maps and B high-level feature maps, where each of A and B is an integer greater than 1. In this case, the fusing the features of the N basic feature maps of the slice to obtain the M enhanced feature maps of the slice may include:
performing convolution processing on an A^{th} low-level feature map of the slice, to obtain a first high-level feature map of the slice as a first enhanced feature map.

In an exemplary embodiment, A=3, B=3, and M=3. In this case, the fusing the features of the N basic feature maps of the slice, to obtain the M enhanced feature maps of the slice may include:
performing convolution processing on a third low-level feature map of the slice, to obtain a first high-level feature map of the slice as a first enhanced feature map;
performing convolution processing on a second low-level feature map of the slice; upsampling the first high-level feature map of the slice, and adding a feature map obtained by performing the convolution processing on the second low-level feature map and a feature map obtained by the upsampling of the first high-level feature map, to obtain a second high-level feature map of the slice as a second enhanced feature map; and
performing convolution processing on a first low-level feature map of the slice, upsampling the second high-level feature map of the slice, and adding a feature map obtained by performing the convolution processing on the first low-level feature map and a feature map obtained by the upsampling of the second high-level feature map, to obtain a third high-level feature map of the slice as a third enhanced feature map.

In step S140, for each of the multiple slices in the to-be-detected medical image, a hierarchically dilated convolutions operation is performed on each of the M enhanced feature maps of the slice by using the deep neural network, to generate a superposed feature map of each of the M enhanced feature maps.

In an exemplary embodiment, the performing the hierarchically dilated convolutions operation on each of the M enhanced feature maps of the slice, to generate the superposed feature map of each of the M enhanced feature maps may include: for each of the M enhanced feature maps,
processing the enhanced feature map by using K dilated convolution layers, to obtain K dilated feature maps of the enhanced feature map, K being an integer greater than 1;
processing the enhanced feature map by using a common convolution layer, to obtain a convolution feature map of the enhanced feature map; and
obtaining the superposed feature map of the enhanced feature map based on the K dilated feature maps and the convolution feature map of the enhanced feature map.

For example, K may be equal to 3, but the present disclosure is not limited thereto. The value of K may be selected according to application scenes.

In an exemplary embodiment, the obtaining the superposed feature map of the enhanced feature map based on the K dilated feature maps and the convolution feature map of the enhanced feature map may include:
concatenating the K dilated feature maps and the convolution feature map of the enhanced feature map to obtain a cascaded feature map of the enhanced feature map;
obtaining respective weights of the K dilated convolution layers and the common convolution layer based on the cascaded feature map of the enhanced feature map; and
obtaining the superposed feature map of the enhanced feature map based on the K dilated feature maps and the convolution feature map of the enhanced feature map, and the respective weights of the K dilated convolution layers and common convolution layer.

In an exemplary embodiment, receptive fields of the K dilated convolution layers are different.

In an exemplary embodiment, the K dilated convolution layers share convolution kernel parameters (i.e., having the same parameters), so as to reduce the amount of parameters, avoid overfitting, and improve the training speed and prediction speed.

In the embodiment of the present disclosure, for other slices among the multiple successive slices, the processing process of obtaining first to third superposed feature maps is similar to that of the first slice, and reference may be made to the process above.

In step S 150, position information of a region of interest in the to-be-detected medical image and a confidence of the position information of the region of interest are predicted by using the deep neural network based on the superposed feature map of each of the multiple slices in the to-be-detected medical image.

In an exemplary embodiment, the predicting the position information of the region of interest in the to-be-detected medical image and the confidence of the position information of the region of interest based on the superposed feature map of each of the multiple slices in the to-be-detected medical image may include:
processing the superposed feature map of each of the multiple slices in the to-be-detected medical image, to obtain initial position information of a region of interest in the to-be-detected medical image and an initial confidence of the initial position information of the region of interest; and
processing the initial position information of the region of interest and the initial confidence of the initial position information of the region of interest, to obtain the position information of the region of interest in the to-be-detected medical image and the confidence of the position information of the region of interest.

In an exemplary embodiment, the processing the superposed feature map, to obtain the initial position information of the region of interest in the to-be-detected medical image and the initial confidence of the initial position information of the region of interest may include:
obtaining a d^{th} depth feature map based on a d^{th} superposed feature map of each of the multiple slices in the to-be-detected medical image, d being an integer greater than or equal to 1 and less than M; and
pre-classifying M depth feature maps, to obtain the initial position information of the region of interest in the to-be-detected medical image and the initial confidence of the initial position information of the region of interest.

In an embodiment of the present disclosure, the deep neural network may include a feature fusing network, a hierarchically dilated convolutions network, a pre-classification network, and a prediction network, the feature fusing network may be used for fusing the low-level features and high-level features in the slice in the to-be-detected medical image, so as to better detect a large object and a small object in the to-be-detected medical image. The hierarchically dilated convolutions network may be used for performing a hierarchically dilated convolutions operation on a feature obtained after fusing the low-level feature and high-level feature, to capture the surrounding information of the region of interest of the slice in the to-be-detected medical image so as to facilitate detecting the region of interest more accurately.

In the embodiment of the present disclosure, the feature fusing network and the hierarchically dilated convolutions network may be used as basic networks for the deep neural network, and the high-level network of the deep neural network may be an improved FPN network that functions as a detection network. The FPN network may include an RPN network and an RCNN network. The pre-classification network may be the RPN network, and the prediction network may be the RCNN network, but the present disclosure is not limited thereto. Upon the feature extraction by the feature fusing network and the hierarchically dilated convolutions network, a new feature map is obtained, and the new feature map is inputted into the RPN network for pre-classifying, that is, the RPN network may be used for performing binary classification (distinguishing whether it is a region of interest) and position regression on the bounding box preset on the new feature map, to obtain initial position information of a region of interest and initial confidence of the initial position information of the region of interest. Then, the RPN network inputs the initial position information of the region of interest and the initial confidence of the initial position information of the region of interest into the RCNN network, for a more accurate category classification and position regression at a second phase, to obtain a final prediction result, that is, to obtain final position information of the region of interest and a final confidence of the position information of the region of interest.

In an exemplary embodiment, the method may further include: acquiring a training dataset, the training dataset including a medical image annotated with position information of a region of interest and a confidence of the position information of the region of interest are annotated; acquiring, in the medical image, a slice annotated with the position information of the region of interest and the confidence of the position information of the region of interest, a slice immediately preceding the annotated slice and a slice immediately succeeding the annotated slice; and training the deep neural network by using the slice annotated with the position information of the region of interest and the confidence of the position information of the region of interest, the slice immediately preceding the annotated slice and the slice immediately succeeding the annotated slice that are in the medical image.

For example, taking a CT image as an example, an open-source DeepLesion dataset established by the National Institutes of Health Clinical Center (NIHCC) may be used as the training dataset, but the present disclosure is not limited thereto. With the deep neural network according to the embodiments of the present disclosure, only one slice annotated with a true region of interest (e.g., a lesion region) and a confidence of the true region of interest, a slice immediately preceding the annotated slice and a slice immediately succeeding the annotated slice, i.e., only three slices (generally, the number of slices collected for a certain part of a patient in one time is far greater than 3) in each CT image in the training dataset are used to train the deep neural network, and the trained deep neural network has a high accuracy for detecting large and small regions of interest, with low redundant information and reduced computing amount and data processing amount.

With the deep learning-based medical image detection method according to the embodiments of the present disclosure, in one aspect, by acquiring the to-be-detected medical image including multiple successive slices and processing each of the multiple slices in the to-be-detected medical image by using a deep neural network, the position information of the region of interest in the to-be-detected medical image and the confidence of the position information of the region of interest are automatically predicted by using three-dimensional information in the to-be-detected medical image, improving the reliability of a prediction result; in another aspect, basic feature maps of different levels of each of the multiple slices in the to-be-detected medical image are fused to obtain enhanced feature maps, that is, low-level features and high-level features in the to-be-detected medical image are fused, such that objects of different scales in the to-be-detected medical image can be better detected by fusing the low-level features and the high-level features, since the low-level features are helpful for detecting small-scale objects in the to-be-detected medical image. In addition, a hierarchically dilated convolutions operation is performed on the fused enhanced feature maps, so as to capture surrounding information of the region of interest in the slice in the to-be-detected medical image, to assist in determining whether the region of interest is a true region of interest based on the surrounding information, facilitating more accurate object detection.

In the embodiment of the present disclosure, the feature extraction network may use any one or a combination of ResNet, MobileNet, DenseNet, and the like as the basic feature extraction network of the deep neural network. ResNet causes relatively easy training of the deep model since the ResNet adopts residual connection and Batch Normalization (BN). Therefore, in the following embodiment, an example in which ResNet50 is used as the feature extraction network is described, but the present disclosure is not limited thereto.

In an embodiment of the present disclosure, a structure of a ResNet50 model is shown in Table 1, where a Rectified Linear Unit (ReLU) layer and a BN layer are provided after each convolution layer.

**Table 1 ResNet50 structure table**

| Layer name | Output size | ResNet50 | |
|---|---|---|---|
| Conv1 (a first convolution layer) | 256×256 | 7×7, 64, stride 2 | |
| Conv2_x (a second convolution layer) | 128×128 | 3×3 max pool, stride 2 | |
| | | 1×1, 64 | ×3 blocks |
| | | 3×3, 64 | |
| | | 1×1, 256 | |
| Conv3_x (a third convolution layer) | 64×64 | 1×1, 128 | ×4 blocks |
| | | 3×3, 128 | |
| | | 1×1, 512 | |
| Conv4_x (a fourth convolution layer) | 32×32 | 1×1, 256 | ×6 blocks |
| | | 3×3, 256 | |
| | | 1×1, 1024 | |
| Conv5_x (a fifth convolution layer) | 16×16 | 1×1, 512 | ×3 blocks |
| | | 3×3, 512 | |
| | | 1×1, 2048 | |

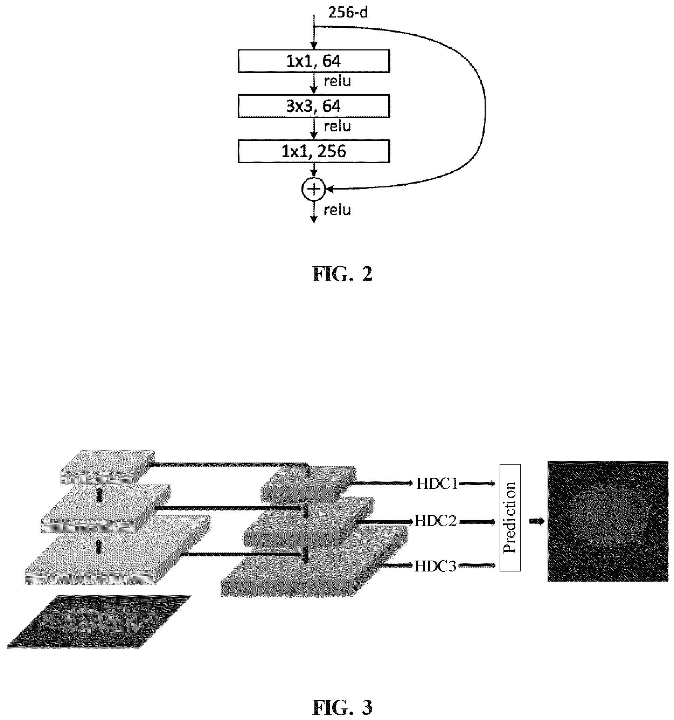

FIG. 2 shows a schematic structural diagram of a block in a Resnet50 network according to an embodiment of the present disclosure. The second convolution layer of ResNet50 is taken as an example to explain the structure of the block herein. The block structures of other convolution layers may refer to FIG. 2.

FIG. 3 shows a schematic structural diagram of an improved FPN network according to an embodiment of the present disclosure. FIG. 3 provides an improved FPN network structure.

As shown in FIG. 3, the embodiment of the present disclosure differs from Faster-RCNN in that before pre-classification by the RPN network, the FPN network fuses the low-level feature and the high-level feature by:
(1) bottom-up feature extraction network, for example, the ResNet50 network is used for extracting features; and
(2) top-down feature enhancing route, the feature of the current layer extracted by ResNet50 is subject to 1×1 convolution dimension reduction and is directly added with the high-level feature which is upsampled with an up-sampling rate of two times for feature fusing. Since the low-level feature is quite helpful for detecting small objects, the objects can be accurately detected after fusing the low-level feature and the high-level feature. The low-level feature includes less semantic information but causes an accurate object position, while the high-level feature includes rich semantic information but causes a rough object position. Therefore, the fused feature is adopted for prediction, so as to capture multi-scale object information.

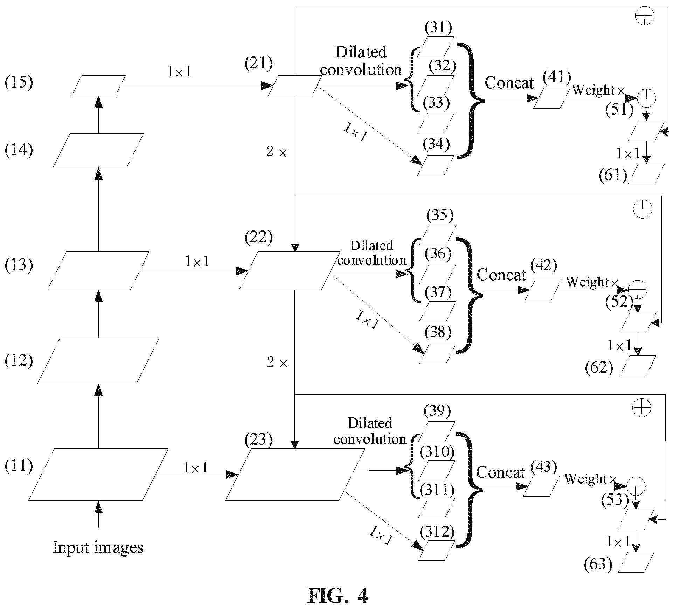

In addition, due to the particularity of the region of interest in the medical image (such as the object organ region and the suspected lesion region), surrounding information is required to determine a region of interest. Therefore, in an embodiment of the present disclosure, an hierarchically dilated convolutions (HDC) operation (for example, HDC1, HDC2, and HDC3 in FIG. 3, but the present disclosure is not limited thereto, and the number of the HDCs depends on application scenes) is further provided in the FPN structure to obtain information of different sizes surrounding the feature map, so as to detect a lesion region accurately. Each HDC may have the structure shown in FIG. 4.

FIG. 4 shows a schematic structural diagram of a feature fusing network and a hierarchically dilated convolutions network according to an embodiment of the present disclosure.

As shown in FIG. 4, first to fifth convolution layers of the ResNet50 form a bottom-up route, to generate first to fifth basic feature maps ((11) to (15) in FIG. 4) of each slice of the to-be-detected medical image, and further form a top-down route. A lateral connection exists between the bottom-up route and the top-down route; the main function of lateral connection of 1*1 convolution kernels herein is to reduce the number of convolution kernels, that is, to reduce the number of feature maps, without changing the size of the feature map.

Bottom-up is a forward process of the network. In the forward process, the size of the feature map may change after passing through some layers, but may not change after passing through some other layers. Layers through which the size of the feature map is unchanged are grouped in to a stage, and the feature extracted each time is outputted by the last layer of each stage, so as to form a feature pyramid.

The top-down process is executed using upsampling, while the lateral connection is fusing the upsampling result with the feature map with a same size generated in the bottom-up process. After fusing, 3*3 convolution kernels may further be adopted to perform convolution on each fusing result (not shown in FIG. 4), so as to eliminate an aliasing effect of upsampling. It is assumed here that the generated feature map result includes a first enhanced feature map (21), a second enhanced feature map (22), and a third enhanced feature map (23) that respectively have one-to-one correspondence to a fifth basic feature map (15), a third basic feature map (13), and a first basic feature map (11) from the bottom-up convolution result.

Still referring to FIG. 4, a first slice is taken as an example, and the processing modes for other slices are similar to the processing mode of the first slice. A first enhanced feature map (21) of the first slice passes through a first dilated convolution layer, a second dilated convolution layer, and a third dilated convolution layer of the HDC1, to respectively obtain a first dilated feature map (31), a second dilated feature map (32), and a third dilated feature map (33). The first enhanced feature map (21) of the first slice passes through a common convolution layer (for example, 1×1 convolution) of the HDC1, to obtain a first convolution feature map (34). The first to third dilated feature maps of the first slice are concatenated to the first convolution feature map of the first slice to generate a first cascaded feature map (41). The weights respectively allocated to the first to third dilated convolution layers and the common convolution layer of the HDC1 are obtained, and the first to third dilated feature maps and the first convolution feature map of the first slice are respectively multiplied by the corresponding weights, and are accumulated to obtain a first accumulation feature map (51). For example, assuming that respective weights of the first to third dilated convolution layers and the common convolution layer of the HDC1 are a1 to a4, the first accumulation feature map (51)=a1× first dilated feature map (31)+a2×second dilated feature map (32)+a3 × third dilated feature map (33)+a4×first convolution feature map (34). Then, vector addition between the first accumulation feature map (51) and the first enhanced feature map (21) is executed, and one 1×1 convolution is performed on the addition result for dimension reduction to obtain a first superposed feature map (61), so as to reduce the amount of parameters.

Similarly, a second enhanced feature map (22) of the first slice passes through a first dilated convolution layer, a second dilated convolution layer, and a third dilated convolution layer of the HDC2, to respectively obtain a fifth dilated feature map (35), a sixth dilated feature map (36), and a seventh dilated feature map (37). The second enhanced feature map (22) of the first slice passes through a common convolution layer (for example, 1×1 convolution) of the HDC2, to obtain a second convolution feature map (38). The fifth dilated feature map (35), the sixth dilated feature map (36), and the seventh dilated feature map (37) of the first slice are concatenated to the second convolution feature map (38) of the first slice to generate a second cascaded feature map (42). The weights respectively allocated to the first to third dilated convolution layers and the common convolution layer of the HDC2 are obtained, and the fifth dilated feature map (35), the sixth dilated feature map (36), the seventh dilated feature map (37) and the second convolution feature map (38) of the first slice are respectively multiplied by the corresponding weights, and are accumulated to obtain a second accumulation feature map (52). For example, assuming that respective weights of the first to third dilated convolution layers and the common convolution layer of the HDC2 are b1 to b4, the second accumulation feature map (52)=b1 × fifth dilated feature map (35)+b2 × sixth dilated feature map (36)+b3×seventh dilated feature map (37)+b4× second convolution feature map (38). Then, vector addition between the second accumulation feature map (52) and the second enhanced feature map (22) is executed, and one 1×1 convolution is performed on the addition result for dimension reduction to obtain a second superposed feature map (62), so as to reduce the amount of parameters.

A third enhanced feature map (23) of the first slice passes through a first dilated convolution layer, a second dilated convolution layer, and a third dilated convolution layer of the HDC3, to respectively obtain a ninth dilated feature map (39), a tenth dilated feature map (310), and an eleventh dilated feature map (311). The third enhanced feature map (23) of the first slice passes through a common convolution layer (for example, 1×1 convolution) of the HDC3, to obtain a third convolution feature map (312). The ninth dilated feature map (39), the tenth dilated feature map (310), and the eleventh dilated feature map (311) of the first slice are concatenated to the third convolution feature map (312) of the first slice to generate a third cascaded feature map (43). The weights respectively allocated to the first to third dilated convolution layers and the common convolution layer of the HDC3 are obtained, and the ninth dilated feature map (39), the tenth dilated feature map (310), the eleventh dilated feature map (311) and the third convolution feature map (312) of the first slice are respectively multiplied by the corresponding weights, and are accumulated to obtain a third accumulation feature map (53). For example, assuming that respective weights of the first to third dilated convolution layers and the common convolution layer of the HDC3 are c1 to c4, the third accumulation feature map (53)=c 1 × ninth dilated feature map (39)+c2 × tenth dilated feature map (310)+c3 × eleventh dilated feature map (311)+c4× third convolution feature map (312). Then, vector addition between the third accumulation feature map (53) and the third enhanced feature map (23) is executed, and one 1×1 convolution is performed on the addition result for dimension reduction to obtain a third superposed feature map (63), so as to reduce the amount of parameters.

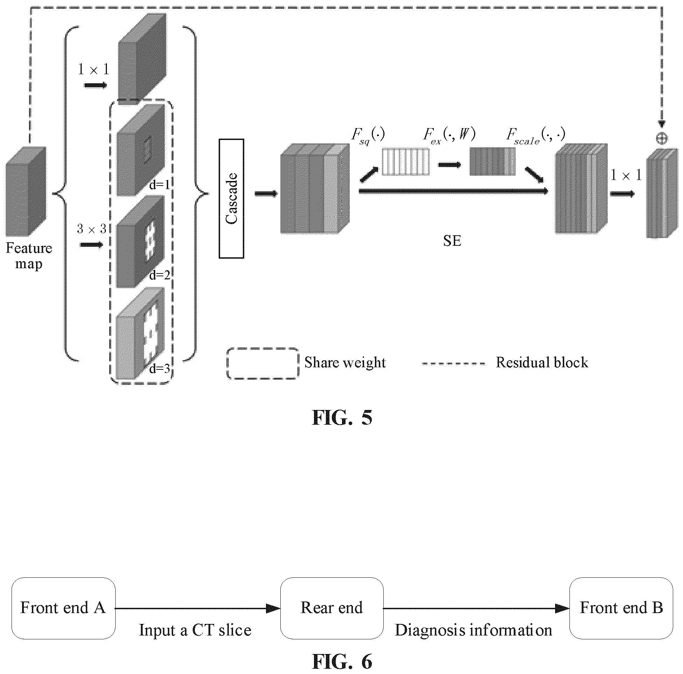

FIG. 5 shows a schematic structural diagram of a hierarchically dilated convolutions network according to an embodiment of the present disclosure. The share weight in FIG. 5 represents that the first to third dilated convolution layers share convolution kernel parameters.

FIG. 5 provides an example of a hierarchically dilated convolutions structure. In the embodiment of the present disclosure, it is assumed that the hierarchically dilated convolutions structures at the first stage to the third stage are the same, and therefore, only one of them is used as an example herein. After fusing the low-level feature and the high-level feature, a depth feature map is obtained. The first enhanced feature map (21) of the first slice is taken as an example for description, and the processing of other enhanced feature maps is similar to that of the first enhanced feature map (21). The first enhanced feature map (21) passes through one 1×1 common convolution layer and three dilated convolution layers each having a size of 3×3 (i.e., the first to third dilated convolution layers). Dilated convolution enlarges the receptive fields by dilating the convolution kernel, and the receptive fields are grown exponentially. Dilated convolution does not increase the parameter amount, a weight value of 0 is allocated to excess points, and no training is needed.

The receptive fields of different dilated convolution layers here are different, so as to capture information of different scales of the slice in the CT image. Then four results (for example, the first dilated feature map (31), the second dilated feature map (32), the third dilated feature map (33), and the first convolution feature map (34)) are concatenated to obtain a new cascaded feature map (for example, a first cascaded feature map (41)). This new cascaded feature map includes surrounding information of three different receptive fields.

The dilated convolution indicates injecting dilation (i.e., 0) into the convolution kernel, and the number of the injected dilations is determined by a parameter dilation (abbreviated as d in the drawings). For example, d=1, the receptive field of the convolution kernel is 3×3; d=2, the receptive field of the convolution kernel is7×7; and d=3, the receptive field of the convolution kernel is 11×11.

Different receptive fields have different important degrees to the detection of the regions of interest, and the receptive field required by a small object is different from that of a large object. Hence, a Squeeze and Excitation module (SE module) is used for automatically learning a corresponding weight. The importance of different receptive fields to different objects may be learnt through the SE module. Finally, dimension reduction is performed by using one 1×1convolution, so as to reduce the amount of parameters.

After the above operations, vector addition is performed on the first superposed feature map of the first slice, a first superposed feature map of a second slice, and a first superposed feature map of a third slice to obtain a new first depth feature map; vector addition is performed on a second superposed feature map of the first slice, a second superposed feature map of the second slice, and a second superposed feature map of the third slice to obtain a new second depth feature map; vector addition is performed on a third superposed feature map of the first slice, a third superposed feature map of the second slice, and a third superposed feature map of the third slice to obtain a new third depth feature map. The new first to third depth feature maps are inputted into the RPN network for pre-classifying, and then are inputted into the RCNN network for prediction, to obtain final lesion position information and confidence.

With the method according to the embodiments of the present disclosure, 3D information of the to-be-detected medical image such as a CT image may be used. Multiple successive slices are inputted into a deep neural network for detecting a region of interest. After ROI-pooling, information of the multiple slices is fused to obtain a new feature map that is used for predicting the position information of the region of interest. That is, the three-dimensional information of the CT image is used to improve the reliability of the prediction result. Applying computed tomography to a human part may obtain a 3D imaging picture of the part. In addition, during the training and prediction phases of the model, only three slices of one CT image are required, which does not increase the computing amount or introduce access redundant information. Moreover, the method above further considers the multi-scale problem existing in the CT image lesion detection, i.e., scales of different regions of interest are greatly different from each other, ranging from 1 mm to 500 mm. It is obvious that for the CT image in which the large object and small object are simultaneously detected, the deep neural network according to the embodiments of the present disclosure is more sensitive and has strong information extraction capability.

In an embodiment of the present disclosure, the deep neural network is trained by using a training dataset in advance. During parameter initialization, the first to fifth convolution layers of the ResNet50 may adopt the parameter of a ResNet50 trained in advance by using a ImageNet dataset, and the newly added layer may be initialized by using a Gaussian distribution with a variance of 0.01 and a mean of 0.

In an embodiment of the present disclosure, during training of the model, in the RPN network, an IoU value between an anchor and gt_BBox being greater than 0.5 is used as a positive sample, and an IoU value being less than 0.3 is used as a negative sample, and 48 samples are used. For the RCNN network, an IoU value between a proposal and gt_BBox being greater than 0.5 is used as a positive sample, and an IoU value being less than 0.4 is used as a negative sample, and 48 samples are used.

In an embodiment of the present disclosure, a loss function may include two parts: sorting loss for an article in each bounding box, which is expressed by a cross entropy loss function, and regression loss for each bounding box position, which is expressed by a smooth L1 loss function.

In an embodiment of the present disclosure, stochastic gradient descent (SGD) based gradient descent method may be adopted to obtain a convolutional template parameter w and an offset parameter b of the neural network model. During each iteration, a prediction result error is calculated and backpropagated to a convolutional neural network model, and gradient is calculated and the parameter of the convolutional neural network model is updated.

FIG. 6 shows a schematic diagram of a deep learning-based medical image detection method according to an embodiment of the present disclosure.

FIG. 6 shows a flowchart of applying the method according to the embodiment of the present disclosure. When a front end A (which may be, for example, a medical image acquisition device) acquires image data, such as a CT image, the front end A upload multiple CT slices of the CT image to a rear end. The rear end uses the deep learning-based medical image detection method according to the embodiment above, to obtain a region of a suspected lesion and a corresponding confidence as diagnosis information, and outputs the diagnosis information to a front end B (for example, a doctor client).

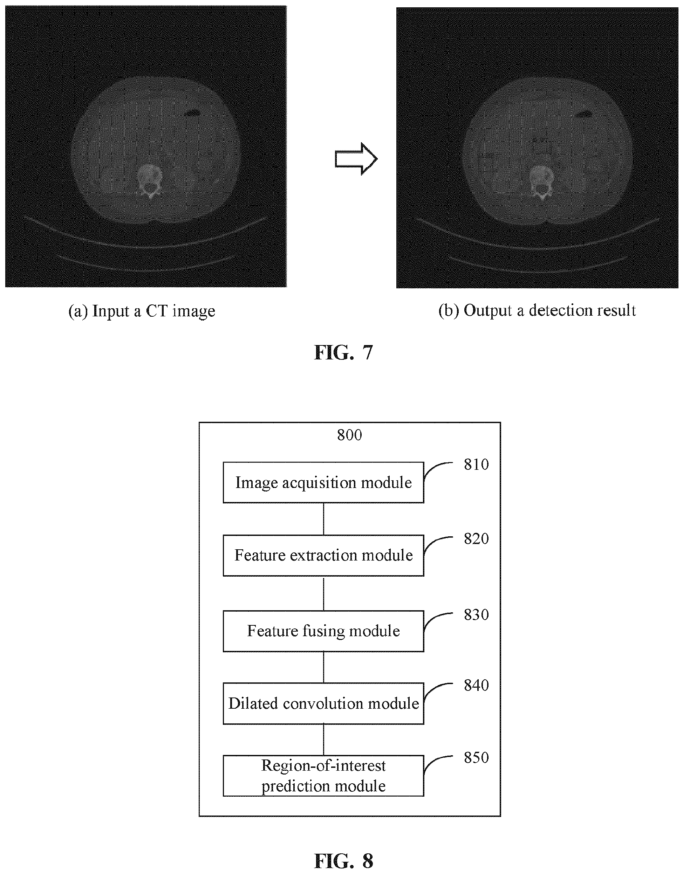

FIG. 7 shows a schematic diagram of a detection effect of a deep learning-based medical image detection method according to the embodiments of the present disclosure.

As shown in FIG. 7, the CT image shown in FIG. 7 (a) is inputted into the deep neural network according to the embodiments of the present disclosure, and a detection result as shown in FIG. 7 (b) is outputted.

In the deep learning-based medical image detection method according to the embodiments of the present disclosure, the deep neural network may be an improved Feature Pyramid Network (FPN). In one aspect, the capability of the network for capturing multi-scale information is strengthened, so as to enhance the capability of the network for detecting the regions of interest of different scales. In another aspect, as compared with the related technologies, under the same detection accuracy of the region of interest, with the technical solutions according to the embodiments of the present disclosure, only a slice with annotation information, a slice immediately preceding the slice with annotation information, and a slice immediately succeeding the slice with annotation are required for training the deep neural network, that is, a model with a high detection accuracy can be obtained by training by using only the three slices in each medical image, where the three-dimensional information in the medical image is utilized, without causing excess redundant information, thereby reducing a data processing amount of the training process and the prediction phase, improving the computing processing rate and efficiency, and facilitating faster detection of the position of the region of interest in the medical image and the confidence of the position of the region of interest. Moreover, the deep learning-based medical image detection method is applicable to multi-scale CT image detection for assisting a doctor in detecting a suspected lesion region in the CT image. Therefore, the method may be distributed to hospitals and community recover centers for supporting doctors, reducing the time required for diagnosis, reducing workload and improving the working efficiency of doctors.

Other contents and specific implementations in the embodiment of the present disclosure may refer to the embodiment above, and will not be repeated herein.

FIG. 8 shows a block diagram of a deep learning-based medical image detection apparatus according to an embodiment of the present disclosure. The deep learning-based medical image detection apparatus according to the embodiment of the present disclosure may be disposed in any electronic device having a computing processing capability, such as a terminal device, a server, a server cluster, and a cloud server, which is not limited by the present disclosure. In following exemplary description, the apparatus according to the embodiment of the present disclosure being disposed in a cloud server is taken as an example for description.

As shown in FIG. 8, the deep learning-based medical image detection apparatus 800 according to the embodiment of the present disclosure may include an image acquisition module 810, a feature extraction module 820, a feature fusing module 830, a dilated convolution module 840, and a region-of-interest prediction module 850.

The image acquisition module 810 is configured to acquire a to-be-detected medical image, the to-be-detected medical image including multiple slices.

The feature extraction module 820 is configured to extract, for each of the multiple slices in the to-be-detected medical image, N basic feature maps of the slice by using a deep neural network, N being an integer greater than 1.

The feature fusing module 830 is configured to fuse, for each of the multiple slices in the to-be-detected medical image, features of the N basic feature maps of the slice by using the deep neural network, to obtain M enhanced feature maps of the slice, M being an integer greater than 1.

The dilated convolution module 840 is configured to perform, for each of the multiple slices in the to-be-detected medical image, a hierarchically dilated convolutions operation on each of the M enhanced feature maps of the slice by using the deep neural network, to generate a superposed feature map of each of the M enhanced feature maps of the slice.

The region-of-interest prediction module 850 is configured to predict position information of a region of interest in the to-be-detected medical image and a confidence of the position information of the region of interest by using the deep neural network based on the superposed feature map of each of the multiple slices in the to-be-detected medical image.

In an exemplary embodiment, the N basic feature maps include A low-level feature maps and B high-level feature maps, each of A and B being an integer greater than 1. The feature fusing module 830 is configured to:
perform convolution processing on an i^{th} low-level feature map of the slice; upsample a j^{th} high-level feature map of the slice; and add a feature map obtained by performing the convolution processing on the i^{th} low-level feature map and a feature map obtained by the upsampling of the j^{th} high-level feature map, to obtain a k^{th} enhanced feature map of the slice, where 1≤i<A, 1<j≤B, 1<k ≤M, and each of i, j, and k is an integer.

In an exemplary embodiment, the N basic feature maps include A low-level feature maps and B high-level feature maps, each of A and B being an integer greater than 1; and the feature fusing module 830 is configured to:
perform convolution processing on an A^{th} low-level feature map of the slice, to obtain a first high-level feature map of the slice as a first enhanced feature map.

In an exemplary embodiment, A=3, B=3, and M=3. The feature fusing module 830 is configured to:
perform convolution processing on a third low-level feature map of the slice, to obtain a first high-level feature map of the slice as a first enhanced feature map;
perform convolution processing on a second low-level feature map of the slice, upsample the first high-level feature map of the slice, and add a feature map obtained by performing the convolution processing on the second low-level feature map and a feature map obtained by the upsampling of the first high-level feature map, to obtain a second high-level feature map of the slice as a second enhanced feature map; and
perform convolution processing on a first low-level feature map of the slice, upsample the second high-level feature map of the slice, and add a feature map obtained by performing the convolution processing on the first low-level feature map and a feature map obtained by the upsampling of the second high-level feature map, to obtain a third high-level feature map of the slice as a third enhanced feature map.

In an exemplary embodiment, the dilated convolution module 840 may include:
a dilated feature obtaining unit, configured to respectively process, for each of the M enhanced feature maps, the enhanced feature map by using K dilated convolution layers, to obtain K dilated feature maps of the enhanced feature map, K being an integer greater than 1;
a convolution feature obtaining unit, configured to process, for each of the M enhanced feature maps, the enhanced feature map by using a common convolution layer, to obtain a convolution feature map of the enhanced feature map; and
a superposed feature obtaining unit, configured to obtain, for each of the M enhanced feature maps, the superposed feature map of the enhanced feature map based on the K dilated feature maps and the convolution feature map of the enhanced feature map.

In an exemplary embodiment, the superposed feature obtaining unit is configured to:
concatenate the K dilated feature maps and the convolution feature map of the enhanced feature map to obtain a cascaded feature map of the enhanced feature map;
obtain respective weights of the K dilated convolution layers and the common convolution layer based on the cascaded feature map of the enhanced feature map; and
obtain the superposed feature map of the enhanced feature map based on the enhanced feature map, the K dilated feature maps and the convolution feature map, and the respective weights of the K dilated convolution layers and the common convolution layer.

In an exemplary embodiment, receptive fields of the K dilated convolution layers are different.

In an exemplary embodiment, the K dilated convolution layers share convolution kernel parameters.

In an exemplary embodiment, the region-of-interest prediction module 840 may include a pre-classification unit and a region-of-interest predicting unit.

The pre-classification unit is configured to process the superposed feature map of each of the multiple slices in the to-be-detected medical image, to obtain initial position information of a region of interest in the to-be-detected medical image and an initial confidence of the initial position information of the region of interest; and
the region-of-interest predicting unit is configured to process the initial position information of the region of interest and the initial confidence of the initial position information of the region of interest, to obtain the position information of the region of interest in the to-be-detected medical image and the confidence of the position information of the region of interest.

In an exemplary embodiment, the pre-classification unit is configured to:
obtain a d^{th} depth feature map based on a d^{th} superposed feature map of each of the multiple slices in the to-be-detected medical image, d being an integer greater than or equal to 1 and less than M; and
pre-classify M depth feature maps, to obtain the initial position information of the region of interest in the to-be-detected medical image and the initial confidence of the initial position information of the region of interest.

In the exemplary embodiment, the deep learning-based medical image detection apparatus 800 may further include:
a training set acquisition module, configured to acquire a training dataset, the training dataset including a medical image annotated with position information of a region of interest and a confidence of the position information of the region of interest;
a slice acquisition module, configured to acquire, in the medical image, a slice annotated with the position information of the region of interest and the confidence of the position information of the region of interest, a slice immediately preceding the annotated slice and a slice immediately succeeding the annotated slice; and
a model training module, configured to train the deep neural network by using the slice annotated with the position information of the region of interest and the confidence of the position information of the region of interest, the slice immediately preceding the annotated slice and the slice immediately succeeding the annotated slice that are in the medical image.

In an exemplary embodiment, the to-be-detected medical image may include a CT image.

Since each functional module of the deep learning-based medical image detection apparatus 800 of the exemplary embodiment of the present disclosure corresponds to each step of the exemplary embodiment of the deep learning-based medical image detection method above, and the details are not repeated here.

In the exemplary embodiment of the present disclosure, also provided is an electronic device capable of implementing the method above.

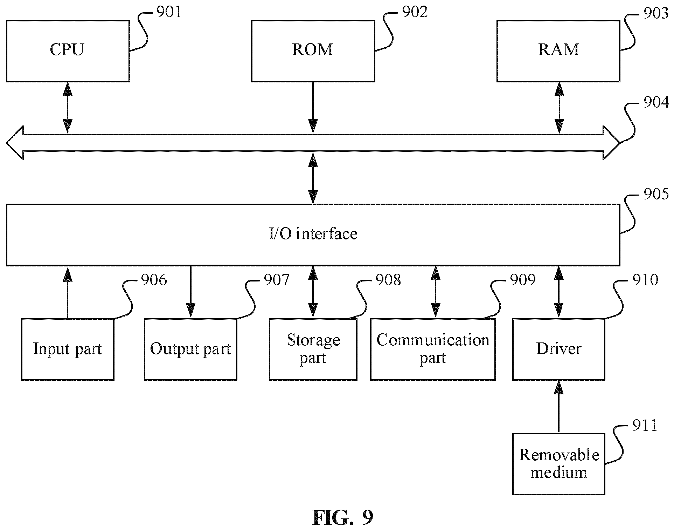

FIG. 9 shows a schematic structural diagram of a computer system adapted to implement an electronic device according to an embodiment of the present disclosure. The computer system of the electronic device shown in FIG. 9 is merely an example, and does not constitute any limitation on functions and use ranges of the embodiments of the present disclosure.

As shown in FIG. 9, the computer system includes a central processing unit (CPU) 901, which can perform various appropriate actions and processing according to a program stored in a read-only memory (ROM) 902 or a program loaded into a random access memory (RAM) 903 from a storage part 908. The RAM 903 further stores various programs and data required for system operations. The CPU 901, the ROM 902, and the RAM 903 are connected to each other through a bus 904. An input/output (I/O) interface 905 is also connected to the bus 904.

The following components are connected to the I/O interface 905: an input part 906 including a keyboard, a mouse, or the like; an output part 907 including a cathode ray tube (CRT), a liquid crystal display (LCD), a speaker, or the like; a storage part 908 including a hard disk or the like; and a communication part 909 of a network interface card, including a LAN card, a modem, or the like. The communication part 909 performs communication processing by using a network such as the Internet. A driver 910 is also connected to the I/O interface 905 as required. A removable medium 911, such as a magnetic disk, an optical disc, a magneto-optical disk, or a semiconductor memory, is installed on the drive 910 as required, so that a computer program read from the removable medium is installed into the storage part 908 as required.

Particularly, according to an embodiment of the present disclosure, the processes described in the following by referring to the flowcharts may be implemented as computer software programs. For example, this embodiment of the present disclosure includes a computer program product, the computer program product includes a computer program carried on a computer-readable medium, and the computer program includes program code used for performing the methods shown in the flowcharts. In such an embodiment, the computer program may be downloaded and installed from a network through the communication part 1009, and/or installed from the removable medium 1011. When the computer program is executed by the central processing unit (CPU) 901, the above functions defined in the system of the present disclosure are performed.

The computer-readable medium shown in the present disclosure may be a computer-readable signal medium or a computer-readable storage medium or any combination of the two. The computer-readable storage medium may be, for example, but is not limited to, an electric, magnetic, optical, electromagnetic, infrared, or semi-conductive system, apparatus, or component, or any combination of the above. A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination thereof. In the present disclosure, the computer-readable storage medium may be any tangible medium containing or storing a program, and the program may be used by or used in combination with an instruction execution system, an apparatus, or a device. In the present disclosure, a computer-readable signal medium may include a data signal being in a baseband or propagated as a part of a carrier wave, the data signal carrying computer-readable program code. A data signal propagated in such a way may assume multiple forms, including, but not limited to, an electromagnetic signal, an optical signal, or any appropriate combination thereof. The computer-readable signal medium may be further any computer readable medium in addition to a computer-readable storage medium. The computer readable medium may send, propagate, or transmit a program that is used by or used in conjunction with an instruction execution system, an apparatus, or a device. The computer-readable medium may send, propagate, or transmit a program that is used by or used in conjunction with an instruction system, an apparatus, or a device. The program code included in the computer-readable medium may be transmitted by using any suitable medium, including but not limited to, wireless transmission, a wire, a cable, radio frequency (RF) or the like, or any other suitable combination thereof.

The flowcharts and block diagrams in the accompanying drawings illustrate possible system architectures, functions and operations that may be implemented by a system, a method, and a computer program product according to various embodiments of the present disclosure. In this regard, each box in a flowchart or a block diagram may represent a module, a program segment, or a part of code. The module, the program segment, or the part of code includes one or more executable instructions used for implementing designated logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

Related modules or units described in the embodiments of the present disclosure may be implemented in a software manner, or may be implemented in a hardware manner, and the module or the unit described can also be set in a processor. Names of these modules or units do not constitute a limitation on the modules or the units in a case.

According to another aspect, the present disclosure further provides a computer-readable medium. The computer-readable medium may be included in the electronic device described in the foregoing embodiments, or may exist alone and is not disposed in the electronic device. The computer-readable medium carries one or more programs, the one or more programs, when executed by the electronic device, causing the electronic device to implement the deep learning-based medical image detection method according to the embodiments above.

For example, the electronic device may implement the following as shown in FIG. 1: step S110: acquiring a to-be-detected medical image, the to-be-detected medical image including multiple slices; step S120: extracting, for each of the multiple slices in the to-be-detected medical image, N basic feature maps of the slice by a deep neural network, N being an integer greater than 1; step S130: fusing, for each of the multiple slices in the to-be-detected medical image, features of the N basic feature maps of the slice by using the deep neural network, to obtain M enhanced feature maps of the slice, M being an integer greater than 1; step S140: performing, for each of the multiple slices in the to-be-detected medical image, a hierarchically dilated convolutions operation on each of the M enhanced feature maps by using the deep neural network, to generate a superposed feature map of each of the M enhanced feature maps of the slice; and step S150: predicting position information of a region of interest in the to-be-detected medical image and a confidence of the position information of the region of interest by using the deep neural network based on the superposed feature map of each of the multiple slices in the to-be-detected medical image.

Although several modules or units of a device or an apparatus for action execution are mentioned in the foregoing detailed descriptions, the division is not mandatory. Actually, according to the implementations of the present disclosure, the features and functions of two or more modules or units described above may be specifically implemented in one module or unit. On the contrary, the features and functions of one module or unit described above may be further divided to be embodied by multiple modules or units.

According to the foregoing descriptions of the implementations, a person skilled in the art may readily understand that the exemplary implementations described herein may be implemented by using software, or may be implemented by combining software and necessary hardware. Therefore, the technical solutions of the implementations of the present disclosure may be implemented in a form of a software product. The software product may be stored in a non-volatile storage medium (which may be a CD-ROM, a USB flash drive, a removable hard disk, or the like) or on a network, and includes several instructions for instructing a computing device (which may be a personal computer, a server, a touch terminal, network device, or the like) to perform the methods according to the implementations of the present disclosure.

Other embodiments of the present disclosure are apparent to a person skilled in the art from consideration of the specification and practice of the present disclosure here. The present disclosure is intended to cover any variations, uses or adaptive changes of the present disclosure. Such variations, uses or adaptive changes follow the general principles of the present disclosure, and include well-known knowledge and conventional technical means in the art that are not disclosed in the present disclosure.

## Claims

1. A deep learning-based medical image detection method, executed by an electronic device, the method comprising:
acquiring (S110) a to-be-detected medical image, the to-be-detected medical image comprising a plurality of slices;
extracting (S120), for each of the plurality of slices in the to-be-detected medical image, N basic feature maps of the slice by using a deep neural network, N being an integer greater than 1;
fusing (S130), for each of the plurality of slices in the to-be-detected medical image, features of the N basic feature maps of the slice by using the deep neural network, to obtain M enhanced feature maps of the slice, M being an integer greater than 1;
performing (S140), for each of the plurality of slices in the to-be-detected medical image, a hierarchically dilated convolutions operation on each of the M enhanced feature maps of the slice by using the deep neural network, to generate a superposed feature map of each of the M enhanced feature maps of the slice; and
predicting (S150) position information of a region of interest in the to-be-detected medical image and a confidence of the position information of the region of interest by using the deep neural network based on the superposed feature map of each of the plurality of slices in the to-be-detected medical image, wherein the N basic feature maps comprise A low-level feature maps and B high-level feature maps, each of A and B being an integer greater than 1; and
the fusing the features of the N basic feature maps of the slice by using the deep neural network, to obtain the M enhanced feature maps of the slice comprises:
performing convolution processing on an A^{th} low-level feature map of the slice, to obtain a first high-level feature map of the slice as a first enhanced feature map; and
for each i being an integer greater than or equal to 1 and smaller than A, performing convolution processing on an (A-i)^{th} low level feature map of the slice, upsampling an i^{th} high-level feature map of the slice, and adding a feature map obtained by performing convolution processing on the (A-i)^{th} low level feature map and a feature map obtained by upsampling the i^{th} high-level feature map, to obtain an (i+1)^{th} high level feature map as an (i+1)^{th} enhanced feature map.

2. The method according to claim 1, wherein A=3, B=3, and M=3; and the fusing the features of the N basic feature maps of the slice by using the deep neural network, to obtain the M enhanced feature maps of the slice comprises:
performing convolution processing on a third low-level feature map of the slice, to obtain a first high-level feature map of the slice as a first enhanced feature map;
performing convolution processing on a second low-level feature map of the slice, upsampling the first high-level feature map of the slice, and adding a feature map obtained by performing the convolution processing on the second low-level feature map and a feature map obtained by the upsampling of the first high-level feature map, to obtain a second high-level feature map of the slice as a second enhanced feature map; and
performing convolution processing on a first low-level feature map of the slice, upsampling the second high-level feature map of the slice, and adding a feature map obtained by performing the convolution processing on the first low-level feature map and a feature map obtained by the upsampling of the second high-level feature map, to obtain a third high-level feature map of the slice as a third enhanced feature map.

3. The method according to claim 1, wherein the performing the hierarchically dilated convolutions operation on each of the M enhanced feature maps of the slice by using the deep neural network, to generate the superposed feature map of each of the M enhanced feature maps comprises: for each of the M enhanced feature maps,
respectively processing the enhanced feature map by using K dilated convolution layers, to obtain K dilated feature maps of the enhanced feature map, K being an integer greater than 1;
processing the enhanced feature map by using a common convolution layer, to obtain a convolution feature map of the enhanced feature map; and
obtaining the superposed feature map of the enhanced feature map based on the K dilated feature maps and the convolution feature map of the enhanced feature map.

4. The method according to claim 3, wherein the obtaining the superposed feature map of the enhanced feature map based on the K dilated feature maps and the convolution feature map of the enhanced feature map comprises:
concatenating the K dilated feature maps and the convolution feature map of the enhanced feature map to obtain a cascaded feature map of the enhanced feature map;
obtaining respective weights of the K dilated convolution layers and the common convolution layer based on the cascaded feature map of the enhanced feature map; and
obtaining the superposed feature map of the enhanced feature map based on the enhanced feature map, the K dilated feature maps and the convolution feature map, and the respective weights of the K dilated convolution layers and the common convolution layer.

5. The method according to claim 3 or 4, wherein receptive fields of the K dilated convolution layers are different.

6. The method according to claim 3 or 4, wherein the K dilated convolution layers share convolution kernel parameters.

7. The method according to claim 1, wherein the predicting the position information of the region of interest in the to-be-detected medical image and the confidence of the position information of the region of interest by using the deep neural network based on the superposed feature map of each of the plurality of slices in the to-be-detected medical image comprises:
processing the superposed feature map of each of the plurality of slices in the to-be-detected medical image, to obtain initial position information of a region of interest in the to-be-detected medical image and an initial confidence of the initial position information of the region of interest; and
processing the initial position information of the region of interest and the initial confidence of the initial position information of the region of interest, to obtain the position information of the region of interest in the to-be-detected medical image and the confidence of the position information of the region of interest.

8. The method according to claim 7, wherein the processing the superposed feature map, to obtain the initial position information of the region of interest in the to-be-detected medical image and the initial confidence of the initial position information of the region of interest comprises:
obtaining a d^{th} depth feature map based on a d^{th} superposed feature map of each of the plurality of slices in the to-be-detected medical image, d being an integer greater than or equal to 1 and less than M; and
pre-classifying M depth feature maps, to obtain the initial position information of the region of interest in the to-be-detected medical image and the initial confidence of the initial position information of the region of interest.

9. The method according to claim 1, further comprising:
acquiring a training dataset, the training dataset comprising a medical image annotated with position information of a region of interest and a confidence of the position information of the region of interest;
acquiring, in the medical image, a slice annotated with the position information of the region of interest and the confidence of the position information of the region of interest, a slice immediately preceding the annotated slice and a slice immediately succeeding the annotated slice; and
training the deep neural network by using the slice annotated with the position information of the region of interest and the confidence of the position information of the region of interest, the slice immediately preceding the annotated slice and the slice immediately succeeding the annotated slice that are in the medical image.

10. The method according to claim 1, wherein the to-be-detected medical image comprises a Computed Tomography (CT) image.

11. A computer-readable medium, having a computer program stored thereon, the computer program, when executed by a processor, implementing the deep learning-based medical image detection method according to any one of claims 1 to 10.

12. An electronic device, comprising:
one or more processors; and
a storage apparatus, configured to store one or more programs, the one or more programs, when executed by the one or more processors, causing the one or more processors to implement the deep learning-based medical image detection method according to any one of claims 1 to 10.

13. A computer program product, comprising instructions, the instructions, when run on a computer, causing the computer to execute the deep learning-based medical image detection method according to any one of claims 1 to 10.

## Patentansprüche

1. Auf Tiefem Lernen (Deep Learning) basierendes Verfahren zum Erkennen medizinischer Bilder, ausgeführt von einem elektronischen Gerät, wobei das Verfahren Folgendes umfasst:
Erfassen (S110) eines zu erkennenden medizinischen Bildes, wobei das zu erkennende medizinische Bild mehrere Schnitte (Slices) umfasst,
Extrahieren (S120) von N Grundmerkmalabbildern der Schnitte für jeden der mehreren Schnitte in dem zu erkennenden medizinischen Bild mit Hilfe eines tiefen neuronalen Netzes, wobei N eine ganze Zahl größer 1 ist,
Vereinen (S130) von Merkmalen der N Grundmerkmalabbilder des Schnittes für jeden der mehreren Schnitte in dem zu erkennenden medizinischen Bild mit Hilfe des tiefen neuronalen Netzes, um M verbesserte Merkmalabbilder des Schnittes zu gewinnen, wobei M eine ganze Zahl größer 1 ist,
Durchführen (S140) einer hierarchisch dilatierten Faltungsoperation (Dilated Convolution) an jedem der M verbesserten Merkmalabbilder des Schnittes für jeden der mehreren Schnitte in dem zu erkennenden medizinischen Bild mit Hilfe des tiefen neuronalen Netzes, um ein überlagertes Merkmalabbild jedes der M verbesserten Merkmalabbilder des Schnittes zu erzeugen, und
Vorhersagen (S150) von Positionsinformationen eines Bereichs von Interesse in dem zu erkennenden medizinischen Bild und einer Konfidenz der Positionsinformationen des Bereichs von Interesse mit Hilfe des tiefen neuronalen Netzes basierend auf dem überlagerten Merkmalabbild jedes der mehreren Schnitte in dem zu erkennenden medizinischen Bild, wobei die N Grundmerkmalabbilder A Merkmalabbilder niederen Niveaus und B Merkmalabbilder hohen Niveaus umfassen, wobei A und B jeweils eine ganze Zahl grö-ßer 1 sind, und
das Vereinen der Merkmale der N Grundmerkmalabbilder des Schnittes mit Hilfe des tiefen neuronalen Netzes, um die M verbesserten Merkmalabbilder zu gewinnen, Folgendes umfasst:
Durchführen einer Faltungsoperation an einem A. Merkmalabbild niederen Niveaus des Schnittes, um ein erstes Merkmalabbild hohen Niveaus des Schnittes als erstes verbessertes Merkmalabbild zu gewinnen, und
für jedes i, das eine ganze Zahl größer gleich 1 und kleiner A ist, Durchführen einer Faltungsverarbeitung an einem (A-i). Merkmalabbild niederen Niveaus des Schnittes, Up-sampling eines i. Merkmalabbildes hohen Niveaus des Schnittes und Hinzufügen eines Merkmalabbildes, das durch Durchführen der Faltungsverarbeitung an dem (A-i). Merkmalabbild niederen Niveaus gewonnen wird, und eines Merkmalabbildes, das durch Upsamling des i. Merkmalabbildes hohen Niveaus gewonnen wird, um ein (i+1). Merkmalabbild hohen Niveaus als ein (i+1). verbessertes Merkmalabbild zu gewinnen.

2. Verfahren nach Anspruch 1, wobei A = 3, B = 3 und M = 3 und das Vereinen der Merkmale der N Grundmerkmalabbilder des Schnittes mit Hilfe des tiefen neuronalen Netzes, um die M verbesserten Merkmalabbilder des Schnittes zu gewinnen, Folgendes umfasst:
Durchführen einer Faltungsverarbeitung an einem dritten Merkmalabbild niederen Niveaus des Schnittes, um ein erstes Merkmalabbild hohen Niveaus des Schnittes als ein erstes verbessertes Merkmalabbild zu gewinnen,
Durchführen einer Faltungsverarbeitung an einem zweiten Merkmalabbild niederen Niveaus des Schnittes, Upsampling des ersten Merkmalabbildes hohen Niveaus des Schnittes und Hinzufügen eines Merkmalabbildes, das durch Durchführen der Faltungsverarbeitung des ersten Merkmalabbildes hohen Niveaus gewonnen wird, um ein zweites verbessertes Merkmalabbild zu gewinnen, und
Durchführen einer Faltungsverarbeitung an einem ersten Merkmalabbild niederen Niveaus des Schnittes, Upsamling des zweiten Merkmalabbildes hohen Niveaus des Schnittes und Hinzufügen eines Merkmalabbildes, das durch Durchführen der Faltungsverarbeitung an dem ersten Merkmalabbild niederen Niveaus gewonnen wird, und eines Merkmalabbildes, das durch das Upsamling des zweiten Merkmalabbildes hohen Niveaus gewonnen wird, um ein drittes Merkmalabbild hohen Niveaus des Schnittes als ein drittes verbessertes Merkmalabbild zu gewinnen.

3. Verfahren nach Anspruch 1, wobei das Durchführen der hierarchisch dilatierten Faltungsoperationen an jedem der M verbesserten Merkmalabbilder des Schnittes für jedes der M verbesserten Merkmalabbilder mit Hilfe des tiefen neuronalen Netzes, um das überlagerte Merkmalabbild zu erzeugen, Folgendes umfasst:
entsprechendes Verarbeiten des verbesserten Merkmalabbildes mit Hilfe von K Schichten erweiterter Faltung, um K erweiterte Merkmalabbilder des verbesserten Merkmalabbildes zu gewinnen, wobei K eine ganze Zahl größer 1 ist,
Verarbeiten des verbesserten Merkmalabbildes mit Hilfe einer gemeinsamen Faltungsschicht, um ein Faltungsmerkmalabbild des verbesserten Merkmalabbildes zu gewinnen, und
Gewinnen des überlagerten Merkmalabbildes des verbesserten Merkmalabbildes basierend auf den K erweiterten Merkmalabbildern und dem Faltungsmerkmalabbild des verbesserten Merkmalabbildes.

4. Verfahren nach Anspruch 3, wobei das Gewinnen des überlagerten Merkmalabbildes des verbesserten Merkmalabbildes basierend auf den K erweiterten Merkmalabbildern und dem Faltungsmerkmalabbild des verbesserten Merkmalabbildes Folgendes umfasst:
Verknüpfen der K erweiterten Merkmalabbilder und des Faltungsmerkmalabbildes des verbesserten Merkmalabbildes, um ein kaskadiertes Merkmalabbild des verbesserten Merkmalabbildes zu gewinnen,
Gewinnen entsprechender Gewichtungen der K dilatierten Faltungsschichten und der gemeinsamen Faltungsschicht basierend auf dem kaskadierten Merkmalabbild des verbesserten Merkmalabbildes, und
Gewinnen des überlagerten Merkmalabbildes des verbesserten Merkmalabbildes basierend auf dem verbesserten Merkmalabbild, den K dilatierten Merkmalabbildern und dem Faltungsmerkmalabbild und den entsprechenden Gewichtungen der K dilatierten Faltungsschichten und der gemeinsamen Faltungsschicht.

5. Verfahren nach Anspruch 3 oder 4, wobei Aufnahmefelder der K dilatierten Faltungsschichten unterschiedlich sind.

6. Verfahren nach Anspruch 3 oder 4, wobei die K dilatierten Faltungsschichten Faltungs-Kernel-Parameter gemeinsam nutzen.

7. Verfahren nach Anspruch 1, wobei das Vorhersagen der Positionsinformationen des Bereichs von Interesse in dem zu erkennenden medizinischen Bild und die Konfidenz der Positionsinformationen des Bereichs von Interesse mit Hilfe des tiefen neuronalen Netzes basierend auf dem Überlagerten Merkmalabbild jedes der mehreren Schnitte in dem zu erkennenden medizinischen Bild Folgendes umfasst:
Verarbeiten des überlagerten Merkmalabbildes jedes der mehreren Schnitte in dem zu erkennenden medizinischen Bild, um anfängliche Positionsinformationen eines Bereichs von Interesse in dem zu erkennenden medizinischen Bild und eine anfängliche Konfidenz der anfänglichen Positionsinformationen des Bereichs von Interesse zu gewinnen, und
Verarbeiten der anfänglichen Positionsinformationen des Bereichs von Interesse und der anfänglichen Konfidenz der anfänglichen Positionsinformationen des Bereichs von Interesse, um die Positionsinformationen des Bereichs von Interesse in dem zu erkennenden medizinischen Bild und die Konfidenz der Positionsinformationen des Bereichs von Interesse zu gewinnen.

8. Verfahren nach Anspruch 7, wobei das Verarbeiten des überlagerten Merkmalabbildes, um die anfänglichen Positionsinformationen des Bereichs von Interesse in dem zu erkennenden medizinischen Bild und die anfängliche Konfidenz der anfänglichen Positionsinformationen des Bereichs von Interesse zu gewinnen, Folgendes umfasst:
Gewinnen eines d. tiefen Merkmalabbildes basierend auf einem d. überlagerten Merkmalabbild jedes der mehreren Schnitte in dem zu erkennenden medizinischen Bild, wobei d eine ganze Zahl größer oder gleich 1 und kleiner M ist, und
Vorklassifizieren der M tiefen Merkmalabbilder, um die anfänglichen Positionsinformationen des Bereichs von Interesse in dem zu erkennenden medizinischen Bild und die anfängliche Konfidenz der anfänglichen Positionsinformationen des Bereichs von Interesse zu gewinnen.

9. Verfahren nach Anspruch 1, ferner Folgendes umfassend:
Erfassen eines Trainingsdatensatzes, wobei der Trainingsdatensatz ein medizinisches Bild umfasst, das mit Positionsinformationen eines Bereichs von Interesse und einer Konfidenz der Positionsinformationen des Bereichs von Interesse annotiert ist,
Erfassen eines Schnittes, der mit den Positionsinformationen des Bereichs von Interesse und der Konfidenz der Positionsinformationen des Bereichs von Interesse annotiert ist, eines Schnittes, der dem annotierten Schritt unmittelbar vorausgeht, und eines Schnittes, der dem annotierten Schnitt unmittelbar folgt, in dem medizinischen Bild und
Trainieren des tiefen neuronalen Netzes mit Hilfe des Schnittes, der mit den Positionsinformationen des Bereichs von Interesse und der Konfidenz der Positionsinformationen des Bereichs von Interesse annotiert ist, des Schnittes, der dem annotierten Schritt unmittelbar vorausgeht, und des Schnittes, der dem annotierten Schnitt unmittelbar folgt, die sich in dem medizinischen Bild befinden.

10. Verfahren nach Anspruch 1, wobei das zu erkennende medizinische Bild ein Computertomografiebild (CT-Bild) umfasst.

11. Computerlesbares Speichermedium, auf dem ein Computerprogramm gespeichert ist, wobei das Computerprogramm bei Ausführung durch einen Prozessor das auf Tiefem Lernen basierende Verfahren zum Erkennen medizinischer Bilder nach einem der Ansprüche 1 bis 10 implementiert.

12. Elektronisches Gerät, Folgendes umfassend:
einen oder mehrere Prozessoren und
eine Speichervorrichtung, die dafür konfiguriert ist, ein oder mehrere Programme zu speichern, wobei das eine oder die mehreren Programme bei Ausführung durch den einen oder die mehreren Prozessoren den einen oder die mehreren Prozessoren veranlassen, das auf Tiefem Lernen basierende Verfahren zum Erkennen medizinischer Bilder nach einem der Ansprüche 1 bis 10 zu implementieren.

13. Computerprogrammprodukt, Anweisungen umfassend, wobei die Anweisungen bei Durchführung auf einem Computer den Computer veranlassen, das auf Tiefem Lernen basierende Verfahren zum Erkennen medizinischer Bilder nach einem der Ansprüche 1 bis 10 auszuführen.

## Revendications

1. Procédé de détection d'image médicale sur la base d'un apprentissage profond, exécuté par un dispositif électronique, le procédé comprenant :
l'acquisition (S110) d'une image médicale à détecter, l'image médicale à détecter comprenant une pluralité de tranches ;
l'extraction (S120), pour chacune de la pluralité de tranches dans l'image médicale à détecter, de N cartes de caractéristiques de base de la tranche à l'aide d'un réseau neuronal profond, N étant un entier supérieur à 1 ;
la fusion (S130), pour chacune de la pluralité de tranches dans l'image médicale à détecter, de caractéristiques des N cartes de caractéristiques de base de la tranche à l'aide du réseau neuronal profond, pour obtenir M cartes de caractéristiques améliorées de la tranche, M étant un entier supérieur à 1 ;
la réalisation (S140), pour chacune de la pluralité de tranches dans l'image médicale à détecter, d'une opération de convolutions hiérarchiquement dilatées sur chacune des M cartes de caractéristiques améliorées de la tranche à l'aide du réseau neuronal profond, pour générer une carte de caractéristiques superposée de chacune des M cartes de caractéristiques améliorées de la tranche ; et
la prédiction (S150) d'informations de position d'une région d'intérêt dans l'image médicale à détecter et d'un niveau de confiance des informations de position de la région d'intérêt à l'aide du réseau neuronal profond sur la base de la carte de caractéristiques superposée de chacune de la pluralité de tranches dans l'image médicale à détecter, dans lequel les N cartes de caractéristiques de base comprennent A cartes de caractéristiques de bas niveau et B cartes de caractéristiques de haut niveau, chacun de A et B étant un entier supérieur à 1 ; et
la fusion des caractéristiques des N cartes de caractéristiques de base de la tranche à l'aide du réseau neuronal profond, pour obtenir les M cartes de caractéristiques améliorées de la tranche comprend :
la réalisation d'un traitement de convolutions sur une A^{ième} carte de caractéristiques de bas niveau de la tranche, pour obtenir une première carte de caractéristiques de haut niveau de la tranche en tant qu'une première carte de caractéristiques améliorée ; et
pour chaque i étant un entier supérieur ou égal à 1 et inférieur à A, la réalisation d'un traitement de convolutions sur une (A-i)^{ième} carte de caractéristiques de bas niveau de la tranche, le suréchantillonnage d'une i^{ème} carte de caractéristiques de haut niveau de la tranche, et l'ajout d'une carte de caractéristiques obtenue par la réalisation d'un traitement de convolutions sur la (A-i)^{ième} carte de caractéristiques de bas niveau et d'une carte de caractéristiques obtenue par le suréchantillonnage de la i^{ème} carte de caractéristiques de haut niveau, pour obtenir une (i+1)^{ième} carte de caractéristiques de haut niveau en tant qu'une (i+1)^{ième} carte de caractéristiques améliorée.

2. Procédé selon la revendication 1, dans lequel A=3, B=3 et M=3 ; et la fusion des caractéristiques des N cartes de caractéristiques de base de la tranche à l'aide du réseau neuronal profond pour obtenir les M cartes de caractéristiques améliorées de la tranche comprend :
la réalisation d'un traitement de convolution sur une troisième carte de caractéristiques de bas niveau de la tranche, pour obtenir une première carte de caractéristiques de haut niveau de la tranche en tant qu'une première carte de caractéristiques améliorée ;
la réalisation d'un traitement de convolution sur une deuxième carte de caractéristiques de bas niveau de la tranche, du suréchantillonnage de la première carte de caractéristiques de haut niveau de la tranche, et de l'ajout d'une carte de caractéristiques obtenue par la réalisation du traitement de convolution sur la deuxième carte de caractéristiques de bas niveau et une carte de caractéristiques obtenue par le suréchantillonnage de la première carte de caractéristiques de haut niveau, pour obtenir une deuxième carte de caractéristiques de haut niveau de la tranche en tant qu'une deuxième carte de caractéristiques améliorée ; et
la réalisation d'un traitement de convolution sur une première carte de caractéristiques de bas niveau de la tranche, du suréchantillonnage de la deuxième carte de caractéristiques de haut niveau de la tranche, et de l'ajout d'une carte de caractéristiques obtenue par la réalisation du traitement de convolution sur la première carte de caractéristiques de bas niveau et une carte de caractéristiques obtenue par le suréchantillonnage de la deuxième carte de caractéristiques de haut niveau, pour obtenir une troisième carte de caractéristiques de haut niveau de la tranche en tant qu'une troisième carte de caractéristiques améliorée.

3. Procédé selon la revendication 1, dans lequel la réalisation de l'opération de convolutions hiérarchiquement dilatées sur chacune des M cartes de caractéristiques améliorées de la tranche à l'aide du réseau neuronal profond, pour générer la carte de caractéristiques superposée de chacune des M cartes de caractéristiques améliorées comprend : pour chacune des M cartes de caractéristiques améliorées,
le traitement respectivement de la carte de caractéristiques améliorée à l'aide de K couches de convolutions dilatées, pour obtenir K cartes de caractéristiques dilatées de la carte de caractéristiques améliorée, K étant un entier supérieur à 1 ;
le traitement de la carte de caractéristiques améliorée à l'aide d'une couche de convolution commune, pour obtenir une carte de caractéristiques de convolution de la carte de caractéristiques améliorée ; et
l'obtention de la carte de caractéristiques superposée de la carte de caractéristiques améliorée sur la base des K cartes de caractéristiques dilatées et de la carte de caractéristiques de convolution de la carte de caractéristiques améliorée.

4. Procédé selon la revendication 3, dans lequel l'obtention de la carte de caractéristiques superposée de la carte de caractéristiques améliorée sur la base des K cartes de caractéristiques dilatées et de la carte de caractéristiques de convolution de la carte de caractéristiques améliorée comprend :
la concaténation des K cartes de caractéristiques dilatées et de la carte de caractéristiques de convolution de la carte de caractéristiques améliorée pour obtenir une carte de caractéristiques en cascade de la carte de caractéristiques améliorée ;
l'obtention de poids respectifs des K couches de convolutions dilatées et de la couche de convolution commune sur la base de la carte de caractéristiques en cascade de la carte de caractéristiques améliorée ; et
l'obtention de la carte de caractéristiques superposée de la carte de caractéristiques améliorée sur la base de la carte de caractéristiques améliorée, des K cartes de caractéristiques dilatées et des cartes de caractéristiques de convolution, et des poids respectifs des K couches de convolutions dilatées et de la couche de convolution commune.

5. Procédé selon la revendication 3 ou 4, dans lequel des champs récepteurs des K couches de convolutions dilatées sont différents.

6. Procédé selon la revendication 3 ou 4, dans lequel les K couches de convolutions dilatées partagent des paramètres de noyau de convolution.

7. Procédé selon la revendication 1, dans lequel la prédiction des informations de position de la région d'intérêt dans l'image médicale à détecter et du niveau de confiance des informations de position de la région d'intérêt à l'aide du réseau neuronal profond sur la base de la carte de caractéristiques superposée de chacune de la pluralité de tranche dans l'image médicale à détecter comprend :
le traitement de la carte de caractéristiques superposée de chacune de la pluralité de tranches dans l'image médicale à détecter, pour obtenir des informations de position initiales d'une région d'intérêt dans l'image médicale à détecter et un niveau de confiance initial des informations de position initiales de la région d'intérêt ; et
le traitement des informations de position initiales de la région d'intérêt et du niveau de confiance initial des informations de position initiales de la région d'intérêt, pour obtenir les informations de position de la région d'intérêt dans l'image médicale à détecter et le niveau de confiance des informations de position de la région d'intérêt.

8. Procédé selon la revendication 7, dans lequel le traitement de la carte de caractéristiques superposée, pour obtenir les informations de position initiales de la région d'intérêt dans l'image médicale à détecter et le niveau de confiance initial des informations de position initiales de la région d'intérêt comprend :
l'obtention d'une d^{ième} carte de caractéristiques de profondeur sur la base d'une d^{ième} carte de caractéristiques superposée de chacune de la pluralité de tranches dans l'image médicale à détecter, d étant supérieur ou égal à 1 et inférieur à M ; et
la pré-classification de M cartes de caractéristiques de profondeur, pour obtenir les informations de position initiales de la région d'intérêt dans l'image médicale à détecter et le niveau de confiance initial des informations de position initiales de la région d'intérêt.

9. Procédé selon la revendication 1, comprenant en outre :
l'acquisition d'un jeu de données d'entraînement, le jeu de données d'entraînement comprenant une image médicale annotée avec des informations de position d'une région d'intérêt et un niveau de confiance des informations de position de la région d'intérêt ;
l'acquisition, dans l'image médicale, d'une tranche annotée avec les informations de position de la région d'intérêt et le niveau de confiance des informations de position de la région d'intérêt, d'une tranche précédant immédiatement la tranche annotée et d'une tranche suivant immédiatement la tranche annotée ; et
l'entraînement du réseau neuronal profond à l'aide de la tranche annotée avec les informations de position de la région d'intérêt et le niveau de confiance des informations de position de la région d'intérêt, la tranche précédant immédiatement la tranche annotée et la tranche suivant immédiatement la tranche annotée qui sont dans l'image médicale.

10. Procédé selon la revendication 1, dans lequel l'image médicale à détecter comprend une image de tomodensitométrie (CT).

11. Support lisible par ordinateur sur lequel est stocké un programme informatique qui, lorsqu'il est exécuté par un processeur, met en oeuvre le procédé de détection d'image médicale sur la base d'un apprentissage profond selon l'une quelconque des revendications 1 à 10.

12. Dispositif électronique, comprenant :
un ou plusieurs processeurs ; et
un appareil de stockage configuré pour stocker un ou plusieurs programmes qui, lorsqu'ils sont exécutés par les un ou plusieurs processeurs, amènent les un ou plusieurs processeurs à mettre en oeuvre le procédé de détection d'image médicale sur la base d'un apprentissage profond selon l'une quelconque des revendications 1 à 10.

13. Produit programme informatique comprenant des instructions qui, lorsqu'elles sont exécutées sur un ordinateur, amènent l'ordinateur à mettre en oeuvre le procédé de détection d'image médicale sur la base d'un apprentissage profond selon l'une quelconque des revendications 1 à 10.
